# EUROPEAN PATENT SPECIFICATION

(11) **EP 0 689 038 B1**
(45) Date of publication and mention of the grant of the patent: **20.02.2002**
(21) Application number: 95304290.0
(22) Date of filing: 20.06.1995
(51) Int. Cl.: G01F 19/00, G01F 17/00, G01F 23/14

(54) **Non-invasive method of determining residual liquid reagents**
Nichtinvasives Bestimmungsverfahren von flüssigen Reagenzienresten
Procédé non-invasif pour la détermination du résidu de réactifs liquides

(30) Priority: 21.06.1994 US 263288; 24.03.1995 US 410261
(43) Date of publication of application: 27.12.1995
(73) Proprietor: Johnson & Johnson Clinical Diagnostics, Inc., Rochester New York 14650 (US)
(72) Inventor: Higgins, Michael Andrew, Fairport, New York 14450 (US); Hyde, David D., Ontario, New York 14519 (US); Riall, James Daniel, Pittsford, New York 14534 (US)
(74) Representative: Mercer, Christopher Paul

(56) References cited:
- WO-A-83/02321
- DE-C- 4 013 373
- US-A- 4 888 718
- PATENT ABSTRACTS OF JAPAN vol. 012, no. 066 (P-671), 27 February 1988 & JP-A-62 207912 (SUNTORY LTD)

## Description

The invention relates to a method of determining non-invasively, the amount of liquid reagent remaining in a reagent bottle in a chemical analyzer.

It is known that bottles of reagent liquids in analyzers can be checked for their contents by invasive methods, or those requiring operator involvement for visual inspection. However, both of these are time consuming, and the latter is labor intensive. Therefore there has been a need prior to this invention to provide an automatic, non-intrusive method for determining the level of liquid reagent in such bottles.

It has been known to utilize air pressure to inject a test bearing to determine if enough grease is present. As described in US-A-4,875,366, for example, this is done by injecting a controlled air pressure into a "control" bearing having just "enough" grease, to measure the pressure therein as a standard, and then injecting the controlled pressure into a test bearing with unknown amounts of grease to see how the detected pressure compares to the established standard. However, this is not a field appropriate for clinical analyzers, and in any event the "standard" is always a value with some residual grease remaining. In the case of a reagent bottle, however, the minimum tolerated liquid is zero, to allow a full continuum of pressure to be accurately plotted or calculated.

We have provided a solution to the sensing need noted above.

More specifically, there is provided a method of determining the volume of an incompressible liquid reagent in a bottle of known volume in a chemical analyzer, by detecting the air volume of the bottle not occupied by the liquid reagent, comprising the steps of
a) providing an infinite source of pressurized gas at a fixed known pressure,
b) connecting the source first to at least one control bottle having a known volume of liquid reagent so that the pressurized gas is supplied to the control bottle to calibrate the pressure build-up as a function of the known volume,
c) connecting the source second to a test bottle of unknown amount of liquid reagent so that the pressurized gas is supplied to the test bottle,
d) comparing the pressure build-up of the test bottle with that of the at least one control bottle,
   the connecting steps of steps b) and c) comprising supplying the pressurized gas at a variable flow rate at the fixed pressure so as to measure the variation in flow rate caused by variations in liquid volume present in the test bottle,
   the variable flow rate and the infinite source of fixed gas pressure being sufficient, over an extended period of time, to produce a final predetermined end-point pressure that is the same in both the control bottle and the test bottle; and
e) generating a signal indicative of the predicted remaining liquid volume in the test bottle from the comparison in step d).

Thus it is an advantageous feature of the invention that the remaining amounts of liquid reagent in the analyzer bottle, including substantially none at all, can be automatically and non-intrusively determined.

Yet another related advantageous feature of the invention is that the liquid level detection. requires no mechanical motion of sensors into or out of the reagent bottles, thus reducing contamination of analyzer parts and the likelihood of wearing out parts.

Other advantageous features will become apparent upon reference to the following "Description of the Preferred Embodiments", when read in light of the attached drawings.
Fig. 1 is a plot of pressure over time, illustrating the principle of the invention; and
Fig. 2 is a schematic diagram showing apparatus useful in carrying out the invention.

What follows is stated in the context of the preferred embodiments, wherein certain preferred apparatus is used to provide pressurized air at a known pressure to reagent bottles, and for reading the resulting pressures, or rate of pressure increase, in the bottles at a preferred time, or the time it takes to reach a fixed pressure, all before end-point is reached. In addition, the invention is useful regardless of such particular apparatus that is used or what gas (air or otherwise) is used, and regardless whether the time at which readings are made is before end-point or not.

As used herein, "substantially empty" refers to the condition in which the reagent bottle is for all practical purposes empty, that is,. one in which any residual liquid is insufficient for use by the analyzer. "Substantially full" in a similar manner means, as full as is practical.

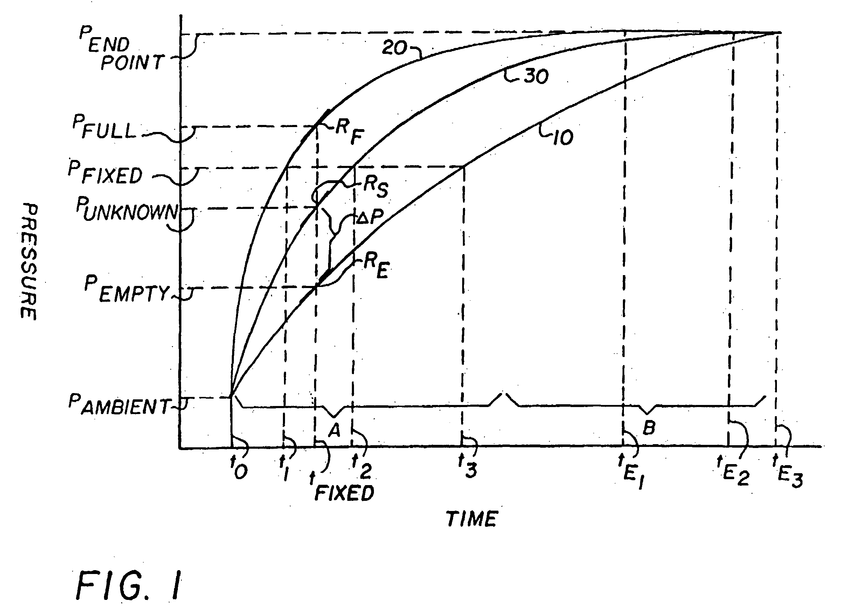

Referring to Fig. 1, when air pressure is injected into a container, specifically either a reagent bottle or a control bottle, at time t₀, the pressure within the bottle starts out at a value labeled "P_{ambient}" (shown as P_{amb}), that is, the pressure otherwise already present. Over time, it builds up, curves 10, 20 and 30, to eventually reach an end-point pressure "P_{endpoint}", that is the maximum pressure that can be present in either the control bottle(s) or the test bottle for that rate of incoming pressurized air. Before the end-point is reached, after some chosen time T_{fixed}, the pressure detectable above any liquid in the bottle will be some value between P_{empty} and P_{full}, where P_{empty} is a minimum pressure available due to substantially no incompressible liquid reagent being present, and P_{full} is the maximum pressure detectable when the reagent bottle is substantially full of liquid reagent. Any of said bottles with unknown amounts of liquid reagent. produce a P_{unknown} reading at time t_{fixed}, that is some value ΔP above P_{empty} (or below P_{full}). Hence, the method requires either P_{empty} or P_{full} to be known, and not necessarily both, although the use of both is preferred. (Alternatively, any two conditions between and including P_{empty} and P_{full} can be used as the control, but for most accurate results the two extremes are preferred.)

Alternatively, the rate of pressure increase R_{E} or R_{F}, can be plotted and compared with the rate for the unknown, R_{S}, at time t_{fixed}, to differentiate between the conditions. These rates are the slopes of the curves.

Preferred is the reading of rates of pressure increase (or absolute pressures) in the time region "A" of Fig. 1, rather than region "B". The reason of course is that as curves 10, 20, or 30 asymptotically approach P_{endpoint} (at times t_{E1}, t_{E2}, and t_{E3},), the actual time of intersection of the curve with Pendpoint becomes difficult to determine.

The method then involves using an infinite source of incoming air at a fixed known pressure to a) plot or determine pressure values of a variable flow rate (or plot the rate of change of pressure value) for two control bottles, one of which eg is substantially empty, between times t₀ and some time thereafter, for example, t_{fixed}. Curve 10 is for the substantially empty control bottle, and curve 20 for the substantially full one. Then, b) plot or determine the pressure values for curve 30 in a test bottle to determine the value of the air pressure above the liquid reagent, or rate of build-up of pressure, at time t_{fixed} when such bottle contains an unknown amount of liquid reagent. If P_{unknown} produces a ΔP that is approaching zero, for example, no more than 1 psi for a total empty bottle volume of 2 L, then a signal is generated to alert the operator of the analyzer that that particular reagent bottle needs to be replaced. The reason is that such minimal ΔP values represent 100 cc of liquid reagent left in such a volume of bottle.

When comparing rates at time t_{fixed} (for example, 1 sec after t₀), it is preferred that more than P_{full} and P_{empty} be known in a calibrated look-up table, so that interpolation between known values is minimized.

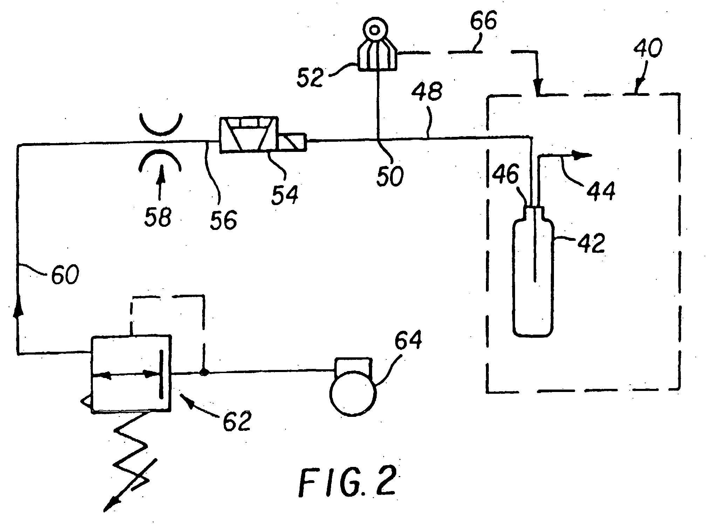

Any conventional apparatus can be utilized, as will be apparent to one skilled, to achieve this method. As an illustrative example, Fig. 2, a chemical analyzer includes one or more liquid reagent bottles 42 (only one being shown). Each of these is sealed to an aspirating line 44 that feeds reagent liquid on demand to the rest of the analyzer, shown in phantom as "40", and at the top 46 of the bottle, an air line 48 which branches at 50 to a pressure sensor such as a pressure transducer 52. The other branch from 50 is connected to one of three ports of a three-way valve 54. A second port of the valve is vented to the atmosphere (not shown) as is conventional, and the third port is connected to an air line 56 that connects with a restrictor valve 58, connected in turn by air line 60 to the outlet of a pressure regulator 62. A compressor 64 is connected to the inlet of regulator 62. All of these pieces of the apparatus are conventional. (The analyzer parts are also conventional, and include a master computer that controls the steps needed to carry out the invention embodiments.)

It will be readily apparent that such a system provides an infinite source of fixed air pressure, which when fed into one of the bottles, produces a variable flow rate. That is, the flow rate necessarily varies, depending on the volume of reagent liquid present. Thus, when bottle 42 is to be tested, valve 54 closes the vent to the atmosphere, and opens line 48 to line 56 to allow build-up of pressure in bottle 42. Pressure sensor 52 generates and sends a signal, line 66, to the analyzer so that the resident pressure in bottle 42 is detected at time t_{fixed}. Alternatively, the rate of pressure buildup can be measured at that time. The analyzer has stored in it, the control values obtained by determining such pressure buildup at time t_{fixed} at least when bottle 42 is substantially empty, and/or when bottle 42 is substantially full. Alternatively, intermediate values of a control bottle 42's volume can also be predetermined to more fully calibrate the values between P_{empty} and P_{full}, if such is desired.

Yet another preferred use of this method and said apparatus is that, if at time t₁, the resident pressure P_{unknown}, or rate of pressure build-up is substantially equal to P_{ambient}, or zero respectively, then the analyzer generates an error signal that bottle 42 is "missing". That is, such a signal is possible only if line 48 is emptying out into an infinite volume, that is, the volume present in the absence of bottle 42.

The signal generations and comparisons are done of course in one or more microprocessors in analyzer 40 (not shown). The programming needed for such is conventional.

As will be readily apparent from Figs. 1 and 2, an alternative approach, instead of reading the variable pressure at fixed time t_{fixed}, is to have the apparatus described above, read the variable time it takes to get to a fixed PRESSURE P_{fixed}. Thus, as shown, the method in such a case, using the apparatus of Fig. 2, reads the time it takes to get to P_{fixed}. The time "t₂" it takes for the test bottle, when compared to the times "t₁" for the substantially full control bottle, or "t₃" for the substantially empty control bottle, is inversely proportional to the amount of liquid reagent remaining in the test bottle.

## Claims

1. A method of determining the volume of an incompressible liquid reagent in a bottle of known volume in a chemical analyzer, by detecting the air volume of the bottle not occupied by the liquid reagent, comprising the steps of
a) providing an infinite source of pressurized gas at a fixed known pressure,
b) connecting the source first to at least one control bottle having a known volume of liquid reagent so that the pressurized gas is supplied to the control bottle to calibrate the pressure build-up as a function of the known volume,
c) connecting the source second to a test bottle of unknown amount of liquid reagent so that the pressurized gas is supplied to the test bottle,
d) comparing the pressure build-up of the test bottle with that of the at least one control bottle,
the connecting steps of steps b) and c) comprising supplying the pressurized gas at a variable flow rate at the fixed pressure so as to measure the variation in flow rate caused by variations in liquid volume present in the test bottle,
the variable flow rate and the infinite source of fixed gas pressure being sufficient, over an extended period of time, to produce a final predetermined end-point pressure that is the same in both the control bottle and the test bottle; and
e) generating a signal indicative of the predicted remaining liquid volume in the test bottle from the comparison in step d).

2. A method as defined in claim 1 wherein the step d) comprises comparing the difference in the rate of pressure build-up in the test bottle compared to the control bottle at a fixed time that is the same time. for both the control bottle and the test bottle.

3. A method as defined in claim 1, wherein the step d) comprises comparing the difference in time it takes for a fixed pressure to be reached in the test bottle compared to the control bottle, the fixed pressure being the same fixed pressure for both the control bottle and the test bottle.

4. A method as defined in claim 1 or claim 2, wherein the step b) connects the source to two control bottles, each containing a different amount of liquid reagent, and the step d) includes the creation of a continuum of pressure build-up conditions based upon the pressure build-up in both of the control bottles.

5. A method as defined in claim 4, wherein one of the control bottles is substantially empty and the other control bottle is substantially full.

6. A method as defined in any one of claims 1 to 5, wherein the comparison of pressure build-up in step d) is done at a time selected to be prior to a final pressure condition in the bottle, both for the control bottle and for the test bottle, the time being the same in both.

7. A method as defined in any one of claims 1 to 6, and further including the step of generating an error signal indicative of the absence of a bottle at the test station, in the event the step d) detects no increase in pressure above ambient.

8. A method as defined in any one of claims 1 to 7, and further including the step of signaling for the replacement of the bottle at any station which produces a comparison of liquid volumes indicative of liquid volumes approaching zero.

## Patentansprüche

1. Verfahren zum Bestimmen des Volumens eines inkompressiblen, flüssigen Reagenzes in einer Flasche von bekanntem Volumen in einem Chemikalienanalysator durch Erfassen des Luftvolumens der Flasche, das nicht von dem flüssigen Reagenz eingenommen wird, umfassend folgende Schritte:
a) Bereitstellen einer unbeschränkten Quelle an unter Druck gesetztem Gas mit einem festgelegten, bekannten Druck,
b) Verbinden der Quelle zuerst mit zumindest einer Kontrollflasche, die ein bekanntes Volumen an flüssigem Reagenz aufweist, so daß das unter Druck stehende Gas der Kontrollflasche zugeführt wird, um den sich als eine Funktion des bekannten Volumens aufgebauten Druck zu kalibrieren,
c) Verbinden der Quelle als zweites mit einer Testflasche mit einer unbekannten Menge an flüssigem Reagenz, so daß das unter Druck stehende Gas der Testflasche zugeführt wird,
d) Vergleichen des sich in der Testflasche aufbauenden Drucks mit dem der zumindest einen Kontrollflasche, wobei
die Verbindungsschritte der Schritte b) und c) das Zuführen des unter Druck stehenden Gases mit einer variablen Flußrate bei dem festgelegten Druck derart umfassen, daß die Variation der Flußrate, die durch Variationen des in der Testflasche vorhandenen Flüssigkeitsvolumens hervorgerufen werden, gemessen werden, und
die variable Flußrate und die unbegrenzte Quelle für den festgelegten Gasdruck ausreichen, über eine verlängerte Zeitperiode, um einen endgültigen, vorherbestimmten Endpunkt-Druck herzustellen, der in der Kontrollflasche und der Testflasche gleich ist; und
e) Erzeugen eines Signals als Anzeichen für das vorausgesagte, verbleibende Flüssigkeitsvolumen in der Testflasche aus dem Vergleich in Schritt d).

2. Verfahren nach Anspruch 1, **dadurch gekennzeichnet, daß**
der Schritt d) einen Vergleich des Unterschieds zwischen dem Wert des sich in der Testflasche aufgebauten Drucks und dem in der Kontrollflasche zu einem festgelegten Zeitpunkt, der der gleiche sowohl für die Kontrollflasche als auch die Testflasche ist, umfaßt.

3. Verfahren nach Anspruch 1, **dadurch gekennzeichnet, daß**
der Schritt d) einen Vergleich des Unterschieds in der Zeit umfaßt, die dafür benötigt wird, einen festgelegten Druck in der Testflasche im Vergleich zu der Kontrollflasche zu erhalten, wobei der festgelegte Druck der gleiche Druck sowohl für die Kontrollflasche als auch die Testflasche ist.

4. Verfahren nach Anspruch 1 oder 2, **dadurch gekennzeichnet, daß**
in dem Schritt b) die Quelle mit zwei Kontrollflaschen verbunden wird, wobei jede eine unterschiedliche Menge an flüssigem Reagenz enthält, und der Schritt d) ein Erzeugen eines Kontinuums an Bedingungen des aufgebauten Drucks auf der Grundlage des sich in den beiden Kontrollflaschen aufgebauten Drucks enthält.

5. Verfahren nach Anspruch 4, **dadurch gekennzeichnet, daß**
eine der Kontrollflaschen im wesentlichen leer und die andere Kontrollflasche im wesentlichen voll ist.

6. Verfahren nach einem der Ansprüche 1 bis 5, **dadurch gekennzeichnet, daß**
der Vergleich des aufgebauten Drucks im Schritt d) zu einem Zeitpunkt durchgeführt wird, der ausgewählt wird, um vor einer Bedingung des endgültigen Drucks in der Flasche vorzulegen, sowohl für die Kontrollflasche als auch für die Testflasche, wobei die Zeit in beiden Fällen die gleiche ist.

7. Verfahren nach einem der Ansprüche 1 bis 6, **gekennzeichnet durch**
den Schritt des Erzeugens eines Fehlersignals als Anzeichen für die Abwesenheit einer Flasche in der Teststation in dem Fall, in dem im Schritt d) kein Anstieg des Drucks über Umgebungsdruck erfaßt wird.

8. Verfahren nach einem der Ansprüche 1 bis 7, **gekennzeichnet durch**
den Schritt des Signalisierens eines Austauschs der Flasche an irgendeiner Stelle, an der ein Vergleich an Flüssigkeitsvolumen durchführt wird, als Anzeichen für ein sich dem Nullpunkt nähernden Flüssigkeitsvolumen.

## Revendications

1. Procédé de détermination du volume d'un réactif liquide incompressible dans une bouteille de volume connu dans un analyseur chimique en détectant le volume d'air de la bouteille non occupé par le réactif liquide, comprenant les étapes consistant à :
a) procurer une source illimitée de gaz comprimé à une pression fixe connue,
b) raccorder la première source à au moins une bouteille témoin renfermant un volume connu de réactif liquide, de sorte que le gaz comprimé soit transféré à la bouteille témoin pour étalonner l'élaboration de pression comme une fonction du volume connu,
c) raccorder la seconde source à une bouteille témoin de quantité inconnue de réactif liquide, de sorte que le gaz comprimé soit transféré à la bouteille-test,
d) comparer l'élaboration de pression de la bouteille-test à celle d'une au moins bouteille témoin,
les étapes de raccordement des étapes b) et c) consistant à transférer le gaz comprimé à un débit d'écoulement variable à la pression fixe de sorte à mesurer la variation de débit d'écoulement induite par les variations dans le volume présent dans la bouteille-test,
le débit d'écoulement variable et la source illimitée de pression gazeuse fixe étant suffisants, sur une durée prolongée, pour produire une pression de point de fin prédéterminée finale qui est la même tant dans la bouteille témoin que dans la bouteille-test ; et
e) générer un signal indicatif du volume liquide résiduel prédit dans la bouteille-test sur la base de la comparaison conduite dans l'étape d).

2. Procédé selon la revendication 1, dans lequel l'étape d) comprend une comparaison de la différence de taux d'élaboration de pression dans la bouteille-test comparée à la bouteille témoin à un instant fixé qui est le même instant tant pour la bouteille témoin que pour la bouteille-test.

3. Procédé selon la revendication 1, dans lequel l'étape d) comprend une comparaison de la différence dans le temps pris pour qu'une pression fixe soit atteinte dans la bouteille-test comparée à la bouteille témoin, la pression fixe étant la même pression fixe tant pour la bouteille témoin que pour la bouteille-test.

4. Procédé selon la revendication 1 ou 2, dans lequel l'étape b) raccorde la source à deux bouteilles témoin, chacune contenant une quantité différence de réactif liquide et l'étape d) comprend la création d'un continuum de conditions d'évolution de pression basé sur l'évolution de pression dans les deux bouteilles témoin.

5. Procédé selon la revendication 4, dans lequel l'une des bouteilles témoin est sensiblement vide et l'autre bouteille témoin est sensiblement pleine.

6. Procédé selon l'une quelconque des revendications 1 à 5, dans lequel la comparaison d'élaboration de pression dans l'étape d) est effectuée à un instant choisi pour être en préalable à une condition de pression finale dans la bouteille, tant pour la bouteille témoin que pour la bouteille-test, le temps étant le même pour les deux.

7. Procédé selon l'une quelconque des revendications 1 à 6, et comprenant en outre l'étape consistant à générer un signal d'erreur indicatif de l'absence d'une bouteille au niveau du poste test, dans le cas où l'étape d) ne détecte aucune croissance de pression au-dessus de la pression ambiante.

8. Procédé selon l'une quelconque des revendications 1 à 7, et comprenant en outre l'étape consistant à générer un signal avisant d'avoir à remplacer la bouteille à tout poste quelconque qui produit une comparaison entre des volumes liquides indiquant que des volumes de liquide se rapprochent de zéro.
